# EUROPÄISCHE PATENTSCHRIFT

(11) **EP 1 266 554 B1**
(45) Veröffentlichungstag und Bekanntmachung des Hinweises auf die Patenterteilung: **08.02.2006**
(21) Anmeldenummer: 02013060.5
(22) Anmeldetag: 13.06.2002
(51) Int. Cl.: A01B 69/00, A01D 41/127

(54) **Einrichtung zur selbsttätigen Lenkung eines landwirtschaftlichen Arbeitsfahrzeugs**
Agricultural working vehicle automatic steering device
Dispositif de direction automatique pour véhicule de travail agricole

(30) Priorität: 16.06.2001 DE 10129136
(43) Veröffentlichungstag der Anmeldung: 18.12.2002
(73) Patentinhaber: DEERE & COMPANY, Moline, Illinois 61265-8098 (US)
(72) Erfinder: Beck, Folker, Dr., Bettendorf, IA 52722 (US)
(74) Vertreter: Holst, Sönke

(56) Entgegenhaltungen:
- EP-A- 0 887 660
- EP-A- 1 002 455
- DE-A- 19 743 884

## Beschreibung

Die Erfindung betrifft eine Einrichtung zur selbsttätigen Lenkung eines mit einem Bearbeitungswerkzeug versehenen landwirtschaftlichen Arbeitsfahrzeugs, mit einer Steuerungseinrichtung, die mit einem Abtastsensor verbunden ist und einer Lenkeinrichtung des Arbeitsfahrzeugs ein auf einem Ausgangssignal des Abtastsensors basierendes Lenksignal zuführt, so dass das Arbeitsfahrzeug selbsttätig entlang einer vom Abtastsensor erfassten Bearbeitungsgrenze geführt wird, wobei der Steuerungseinrichtung eine Information darüber vorliegt, auf welcher Seite des Bearbeitungswerkzeugs sich die Bearbeitungsgrenze befindet.

In der EP 0 878 121 A ist eine automatisch lenkbare Erntemaschine beschrieben, bei der mit einem Laserabtastsensor die Erntegutkante vor der Erntemaschine abgetastet wird. Der Laserabtastsensor misst nach dem Laufzeitprinzip den Abstand zu dem Punkt, an dem ein vom Laserabtastsensor abgestrahlter Lichtstrahl reflektiert wird. Anhand der einer stufenförmigen Entfernungsänderung zugeordneten Position der Erntegutkante und deren Sollposition wird ein Lenksignal erzeugt, das einer Lenkeinrichtung zugeführt wird. Der Laserabtastsensor ist in den dargestellten Ausführungsbeispielen oberhalb der Erntegutkante am Schneidwerk angebracht, kann aber auch auf der Erntemaschine, beispielsweise auf der Fahrerkabine angebracht sein.

In der EP 0 887 660 A ist eine Erntemaschine beschrieben, die ebenfalls mit einem an der Fahrerkabine angeordneten Laserabtastsensor ausgestattet ist. Der Laserabtastsensor dient zur selbsttätigen Lenkung der Erntemaschine entlang dem Erntegut und/oder zur Bestimmung der aufgenommenen Erntegutmenge. Soll der Sensor bei der Getreideernte zur Bestimmung der Erntegutmenge verwendet werden, werden die Schneidwerksgrenzen jeweils einem Schwenkwinkel des Laserabtastsensors zugeordnet. Findet in diesem Schwenkbereich ein Kontursprung statt, wird daraus geschlossen, dass an dieser Stelle eine Gutkante vorliegt. Beim Pflügen kann durch einen am Pflug vorhandenen Sensor die Stellung des Pflugrahmens ermittelt werden. Anhand des Signals des Sensors wird der Lenkreglereinrichtung ein der jeweiligen Bearbeitungsrichtung entsprechender Offset zugeführt. Auf diese Weise berücksichtigt die Lenkeinrichtung den von der Bearbeitungsrichtung abhängigen seitlichen Versatz des Pflugs zum Traktor. Der Abtastwinkelbereich des Laserabtastsensors bleibt aber unabhängig von der Bearbeitungsrichtung und erstreckt sich über beide möglichen Bearbeitungsgrenzen.

Die in den Figuren der EP 0 878 121 A dargestellte Anbringung des Laserabtastsensors über der Erntegutkante hat die Vorteile, dass die Ausrichtung des Sensors fest vorgegeben und die Erkennung der Bestandskante, Pflugfurche oder Schwadachse besonders einfach ist. Mit der Anbringung am Arbeitswerkzeug (Schneidwerk) sind allerdings auch Nachteile verbunden. Der Sensor ist starken Vibrationen ausgesetzt, die die Genauigkeit der Messung nachteilig beeinflussen. Der Sensor muss bei Wechsel des Arbeitsfahrzeugs abmontiert und neu angebracht werden, was zeitaufwändig ist und die Möglichkeit der Beschädigung des Sensors bei jeder Montage beinhaltet. Durch die Anbringung an der Seite des Schneidwerks kann der Sensor leicht beschädigt werden, zum Beispiel im Vorgewende oder beim Umsetzen mit angehängtem Schneidwerk. Schließlich liegt die Bestandskante oder Leitlinie nicht immer nur.auf einer Seite, beispielsweise links am Schneidwerk. Häufig wird abwechselnd links und rechts geerntet. Das ist mit der Anbringung direkt über der Bestandskante mit einem einzigen Sensor nicht möglich. Wird ein zur selbsttätigen Lenkung dienender Laserabtastsensor zur Vermeidung dieser Nachteile an der Kabine angebracht, erweist es sich als problematisch, zu erkennen, an welcher Seite (links oder rechts) die Erntegutkante liegt. Außerdem ist der Abtastwinkelbereich des Laserabtastsensors im Stand der Technik fest vorgegeben, so dass er entweder hinreichend groß zu wählen ist, so dass er zwar die beiden möglichen Bearbeitungsgrenzen erfasst, dann aber nur Daten mit relativ geringer Abtastrate liefert, oder aber zur Erzielung einer höheren Abtastrate kleiner zu wählen ist. Dann ist aber die Erfassung beider möglicher Bearbeitungsgrenzen nicht mehr möglich.

Die DE 197 43 884 A betrifft eine Landmaschine mit einer Vorrichtung zur berührungslosen Erkennung von Bearbeitungsgrenzen, die einen Lasersensor umfasst, der eine vor der Landmaschine liegende Fläche abrastert. Anhand der Laufzeit und der Intensität bzw. der Phasenverschiebung des reflektierten Lichts wird die Bearbeitungsgrenze erkannt. Es wird vorgeschlagen, die Anbringungsposition und/oder Neigung des Sensors manuell oder automatisch zu verändern, um durch eine Änderung der relativen Anbringungsposition hervorgerufene Regeldifferenzen zu vermeiden.

Die EP 1 002.455 beschreibt einen Abtastsensor, dessen Position manuell auf eine Referenzlinie oder einen' Referenzpunkt justierbar ist. Es wird die ganze Sensoreinheit mechanisch verstellt. Der jeweils abgetastete Winkelbereich bleibt konstant.

Die der Erfindung zugrunde liegende Aufgabe wird darin gesehen, eine verbesserte Einrichtung zur selbsttätigen Lenkung bereitzustellen, die auch bei einem an der Fahrerkabine angebrachten Abtastsensor eine präzise selbsttätige Führung einer Landmaschine entlang einer Bearbeitungsgrenze ermöglicht, wobei es beliebig ist, ob die Bearbeitungsgrenze auf der linken oder rechten Seite der Landmaschine liegt.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt vor, den Abtastbereich des Abtastsensors in Abhängigkeit von einer Information zu steuern, aus der hervorgeht, auf welcher Seite des Arbeitsfahrzeugs sich die Bearbeitungsgrenze jeweils befindet. Geht aus der Information hervor, dass die Bearbeitungsgrenze sich auf der rechten Seite befindet, wird die Steuerungseinrichtung veranlassen, dass die Abtasteinrichtung (zumindest über den größten Zeitanteil) einen auf der rechten Seite des Bearbeitungswerkzeug liegenden Bereich abtastet. Analog wird primär die linke Seite abgetastet, wenn die Bearbeitungsgrenze dort liegt. Dies geschieht entweder sensor-intern durch Veränderung der Lage von Linsen, Sender und Empfänger oder durch Drehung des gesamten Abtastsensors. Der Abtastsensor muss nicht den gesamten Bereich vor dem Arbeitsfahrzeug abtasten, sondern nur noch einen eingeschränkten Bereich. Als Abtastsensor findet in der Regel ein an sich bekannter, optisch arbeitender Laserabtastsensor Verwendung, wie er in den oben genannten Druckschriften beschrieben ist. Auch ein Laserabtastsensor mit einem beweglichen Spiegel ist verwendbar. Denkbar ist aber auch die Verwendung eines Bildverarbeitungssystems, das mit einer Kamera arbeitet. In diesem Fall kann die Lage der Kamera und/oder die Brennweite ihres Objektivs durch die Steuereinrichtung variiert werden. Alternativ oder zusätzlich wird der Anteil des von ihr gelieferten Signals, der ausgewertet wird, durch die Steuereinrichtung variiert. Im Rahmen der vorliegenden Erfindung ist unter Bearbeitungsgrenze jegliche Art von Grenze zwischen einem Bereich eines Felds, der bereits bearbeitet (z. B. gepflügt, gemäht, gedüngt, abgeerntet usw.) ist und einem unbearbeiteten Bereich bzw. einem nicht bearbeitbaren. Bereich am Rand eines Feldes zu verstehen.

Auf diese Weise erreicht man, dass die Positionsdaten durch den Abtastsensor mit einer höheren Abtastraten aufgenommen werden können, was ein besseres Regelverhalten bei höheren Geschwindigkeiten zur vorteilhaften Folge hat. Der Abtastsensor kann ohne Einschränkung der Lenkpräzision beide möglichen Bearbeitungsgrenzen überwachen. Daher besteht die Möglichkeit, ihn in der Nähe der Längsachse des Arbeitsfahrzeugs anzuordnen. Die Fahrerkabine ist so konstruiert, dass der Fahrer die Arbeit des Arbeitsfahrzeugs und des Bearbeitungswerkzeugs überwachen kann; daher ist in der Nähe des Kopfes des Fahrers eine günstige Position. Durch die Anbringung an der Fahrerkabine werden gleichzeitig Vibrationen stark vermindert und der Abtastsensor ist vor mechanischer Beschädigung geschützt.

Liegt nur eine Information vor, auf welcher Seite sich die Bearbeitungsgrenze befindet, wird der Abtastsensor zunächst einen mehr oder weniger großen Bereich um die seitliche Begrenzung des Bearbeitungswerkzeugs herum bearbeiten. Mitunter liegt die Bearbeitungsgrenze jedoch nicht genau am Rand des Bearbeitungswerkzeugs, so dass der Abtastsensor die Bearbeitungsgrenze nicht unbedingt treffen wird. Vorzugsweise steuert die Steuerungseinrichtung daher den Abtastbereich des Abtastsensors nicht nur abhängig von der Seite, auf der sich die Bearbeitungsgrenze befindet, sondern zusätzlich in Abhängigkeit von einer Information, aus der die ungefähre Lage der Bearbeitungsgrenze hervorgeht. Dann wird der Abtastbereich auf einen Bereich um die näherungsweise zu erwartende Lage der Bearbeitungsgrenze herum eingeschränkt, so dass die Bearbeitungsgrenze stets optimal erkannt werden kann. Dazu kann der Abtastsensor in seiner Ausrichtung verändert und/oder der Abtastbereich symmetrisch oder unsymmetrisch zur Bearbeitungsgrenze verkleinert, vergrößert und/oder verschoben werden. Dabei wird der Abtastbereich des Abtastsensors vorzugsweise in Abhängigkeit von der Geschwindigkeit festgelegt. Bei hoher Geschwindigkeit ist eine hohe Abtastrate zweckmäßig, aber auch ein breites Blickfeld. Es erfolgt eine Abwägung zwischen diesen Anforderungen, um eine optimale Lenkung zu erreichen. Weiterhin kann der Abtastsensor derart verstellt werden, dass die Entfernung zwischen dem Abtastsensor und dem von ihm erfassten Messpunkt auf dem Feld (Reflexionspunkt) geschwindigkeitsabhängig ist. Dadurch ist auch bei höheren Geschwindigkeiten eine der Reaktionszeit des Arbeitsfahrzeugs entsprechende vorausschauende Messung möglich. Eine selbsttätige Variation des Abtastwinkelbereichs des Abtastsensors ist auch unabhängig von der selbsttätigen Identifikation der Seite, auf der sich die Bearbeitungsgrenze befindet, möglich, um beispielsweise den Abtastsensor an unterschiedliche Bearbeitungswerkzeuge anpassen zu können, bei denen mitunter unterschiedliche Messentfernungen und somit Abtastwinkelbereiche sinnvoll sind.

Im Rahmen des erfindungsgemäßen Gedankens bestehen verschiedene Möglichkeiten, eine Information zu erzeugen, auf welcher Seite des Arbeitsfahrzeugs sich die Bearbeitungsgrenze befindet, bzw. in welchem Abstand von der Längsachse des Arbeitsfahrzeugs sie liegt. Diese Information wird in einer einfachen Ausführungsform der Steuerungseinrichtung manuell zugeführt, d. h. durch eine entsprechende Eingabe des Bedieners über einen Schalter, ein Potentiometer oder ein Tastatur. Es ist denkbar, nur einen Schalter vorzusehen, den der Bediener entsprechend der jeweiligen Bearbeitungsgrenzenseite einstellt. Man erspart sich kostenaufwändige Sensoren.

Denkbar ist auch, die Ausgangssignale des Abtastsensors zur Bestimmung der Seite und/oder Lage der Bearbeitungsgrenze zu verwenden. In einem ersten Durchlauf, der einen relativ großen Winkelbereich abdeckt, wird eine Art Weitwinkelaufnahme gemacht, aus der dann die Seite bzw. Lage der Bearbeitungsgrenze abgeleitet wird, welche anhand einer stufenartigen Höhen- bzw. Entfernungsänderung im Ausgangssignal des Positionssensors erkennbar ist. Anschließend wird der Winkelbereich auf die detektierte Seite bzw. ein Intervall um die erwartete Lage der Bearbeitungsgrenze relativ zum Arbeitsfahrzeug eingeschränkt. Am Ende eines Felds oder wenn beispielsweise nach Durchfahren eines Lagergetreidebestandes oder Umfahren einer relativ engen Kurve die Bearbeitungsgrenze eine Zeitlang nicht erkennbar war, kann der Durchlauf mit großem Winkelbereich auf manuelle Eingabe des Bedieners oder anhand eines vom Abtastsensor abgegebenen Signal, welches darauf hinweist, dass die Bearbeitungsgrenze nicht mehr detektierbar ist, selbsttätig veranlasst werden.

Das Herauswandern der Bearbeitungsgrenze aus dem Abtastbereich des Sensors beispielsweise bei Kurvenfahrt kann verhindert werden, indem die Ausrichtung des Sensors automatisch nachgeführt wird. Die Regelung kann durch die Steuereinheit in einer Weise erfolgen, dass die Bearbeitungsgrenze stets optimal erkannt wird. Besonders hilfreich ist die Nachführung dann, wenn der Abtastbereich des Sensors eingeschränkt ist, beispielsweise um bei hohen Geschwindigkeiten eine hohe Abtastrate zu ermöglichen.

Die einfachste Art, den Abtastbereich einzuschränken ist, den Winkelbereich symmetrisch zur Mittenachse des Sensors zu verkleinern. Eine etwas aufwändigere Ausführung besteht darin, den Abtastbereich symmetrisch zur Lage der Bestandskante zu verkleinern. Auf diese Weise kann die Nachführung des Sensors entlang der Bearbeitungsgrenze vereinfacht werden oder sogar ganz entfallen. Eine Einschränkung des Abtastbereichs kann sowohl von der Steuereinheit im Mähdrescher als auch von der Steuereinheit im Sensor veranlasst und geregelt werden.

Zusätzlich oder alternativ wird vorgeschlagen, dass die Steuerungseinrichtung eine Information über die Seite und/oder Lage der Bearbeitungsgrenze aus einer externen Datenquelle erhält. Beispielsweise kann in einer Speichereinrichtung eine Information über die Breite des Bearbeitungswerkzeugs oder bei einem asymmetrischen Bearbeitungswerkzeug eine Information über die Entfernung seiner linken und rechten Begrenzung von der Längsachse abgelegt sein. Die Speichereinheit ist zweckmäßigerweise physikalisch auf dem Bearbeitungswerkzeug angeordnet und über einen Bus in datenübertragender Weise mit der Steuerungseinrichtung verbunden. Letzterer liegt somit stets eine aktuelle Information vor, wo sich die linke und rechte Begrenzung des Bearbeitungswerkzeugs befindet. Sie erleichtert in Verbindung mit einer Information über die jeweilige Bearbeitungsseite eine Abschätzung der Lage der Bearbeitungsgrenze.

Die externe Datenquelle kann auch ein Positionssensor sein, insbesondere ein Satellitensignalempfänger, ein Trägheitssensor und/oder ein Bewegungssensor. Anhand des mit dem Positionssensor aufgezeichneten, bisher zurückgelegten Wegs ist eine Bestimmung der Seite und/oder Lage der Bearbeitungsgrenze möglich. Wird beispielsweise zu Beginn der Ernte das Vorgewende abgeerntet und ist somit der Umriss des Felds festgelegt, so ist jederzeit bekannt, welcher Anteil des Felds schon abgeerntet ist. Diese Information kann in Verbindung mit der durch den Positionssensor bekannten, derzeitigen Position des Arbeitsfahrzeugs benutzt werden, die Lage der Bearbeitungskante vorherzusagen, insbesondere wenn der Abtastsensor keine Bearbeitungsgrenze mehr erkennen kann, z. B. bei Kurvenfahrten oder Lagergetreide. Auch bei Einfahrt auf das Feld kann diese Information genutzt werden, um in Verbindung mit einer abgespeicherten Karte die Seite und/oder Lage der Bearbeitungsgrenze zu erkennen und den Abtastsensor entsprechend auszurichten. Die Vorhersage der Bestandsgrenze beruht auf der Annahme, dass Fahrwege stetig und zur Nachbarspur parallel verlaufen. Nur entsprechende Kanten werden vom Abtastsensor als Möglichkeit für die Bestandskante verwendet. Schräg oder in unplausiblem Abstand verlaufende Kanten, die vom Abtastsensor aufgezeichnet werden, können vernachlässigt werden. Zur Erkennung schräg verlaufender Kanten werden alle erfassten Kanten eine gewisse Zeitlang gespeichert, so dass deren Verlauf erkennbar wird. Auf diese Weise kann der Abtastwinkelbereich des Abtastsensors programmgesteuert verkleinert werden. Bei der Einengung des Abtastwinkelbereichs muss allerdings die Qualität der Positionsdaten mit in Betracht gezogen werden. Deshalb wird die Verlässlichkeit der Positionsdaten ständig überprüft und mit berücksichtigt. Außerdem besteht die Möglichkeit, den Positionssensor als Backupsystem für den Abtastsensor einzusetzen.

Als Positionssensor kommt auch ein an sich bekannter, an einem Schneidwerk angebrachter, beispielsweise mit Ultraschall- oder kapazitiven Sensoren arbeitender Schnittbreitensensor in Frage, der eingerichtet ist, die Lage der Erntegutkante zu erkennen. Ein derartiger Schnittbreitensensor ist in der Europäischen Patentanmeldung 01105749.4 offenbart, deren Offenbarung durch Verweis hierin mit aufgenommen wird.

In den Zeichnungen ist ein nachfolgend näher beschriebenes Ausführungsbeispiel der Erfindung dargestellt. Es zeigt:
- Fig. 1: eine Seitenansicht eines Arbeitsfahrzeugs mit einer erfindungsgemäßen Einrichtung zur selbsttätigen Lenkung;
- Fig. 2: ein Blockdiagramm der Einrichtung;
- Fig. 3: eine Draufsicht auf das Arbeitsfahrzeug beim Abernten eines Felds; und
- Fig. 4: ein Flussdiagramm, nach dem die Steuereinrichtung der erfindungsgemäßen Einrichtung zur selbsttätigen Lenkung arbeitet.

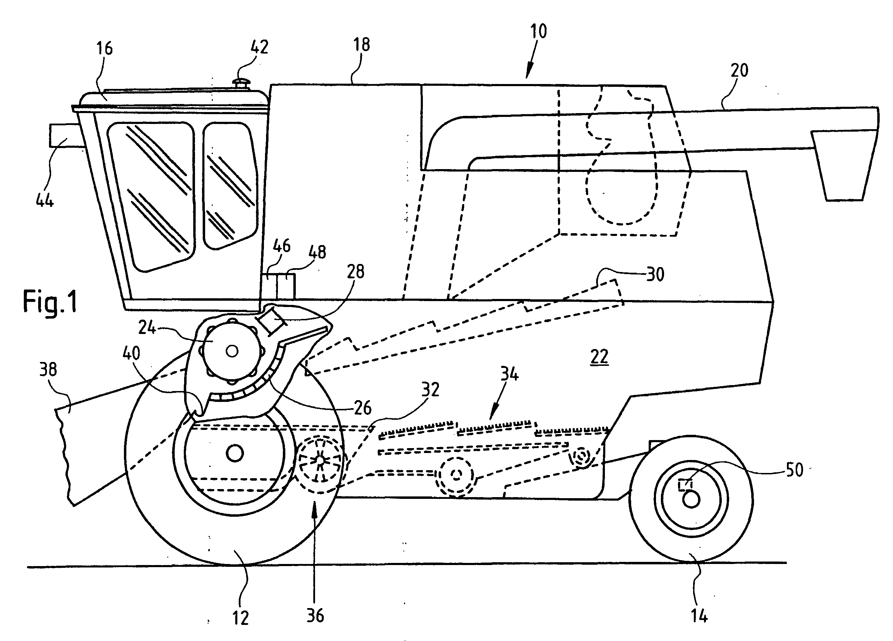

Eine in Figur 1 gezeigtes landwirtschaftliches Arbeitsfahrzeug 10 in der Form eines Mähdreschers ist auf vorderen angetriebenen und rückwärtigen, lenkbaren Rädern 12 bzw. 14 getragen und weist eine Fahrerkabine 16 auf, von der aus sie von einem Fahrer bedient werden kann. Anstatt eines Mähdreschers könnte ebenso eine andere Erntemaschine, wie ein Feldhäcksler, eine selbstfahrende Großballenpresse oder ein Zugfahrzeug, wie ein Traktor mit einem Bodenbearbeitungsgerät oder einer Sämaschine in Frage kommen. An die Fahrerkabine 16 schließt sich rückwärtig ein Korntank 18 an, der in ihn abgegebenes Gut über ein Entleerrohr 20 nach außen abgeben kann. Der Korntank 18 lagert auf einem Rahmen 22, in dem zugeführtes Gut auf dem Weg über eine Dreschtrommel 24, einen Dreschkorb 26 und eine Wendetrommel 28 in seine großen und kleinen Bestandteile zerlegt wird. Auf daran anschließenden Schüttlern 30, sowie auf einem Vorbereitungsboden 32 und Sieben 34 wird eine weitere Trennung des geernteten Guts durchgeführt, wobei schließlich der ausgedroschene Gutanteil in den Korntank 18 gefördert wird, die großen Erntegutteile über die Schüttler 30 auf den Boden abgelegt werden und leichte Bestandteile mittels eines Gebläses 36 von den Sieben 34 ebenfalls auf den Boden geblasen werden. Auf dem Boden liegendes oder stehendes Gut wird über einen Schrägförderer 38 und eine Steinfangmulde 40 der Dreschtrommel 24 zugeführt, nachdem es von einer nicht gezeigten Erntegutbergungsvorrichtung vom Boden aufgenommen worden ist.

An der Oberseite der Fahrerkabine 16 ist ein Positionssensor 42 angeordnet, bei dem es sich um eine Antenne zum Empfang von GPS-Signalen handelt.

An der Vorderseite der Fahrerkabine 16 befindet sich ein Abtastsensor 44, der einen Laserstrahl aussendet, welcher in Vorwärtsfahrtrichtung etwa 10 m vor der selbstfahrenden Arbeitsmaschine 10 den Erdboden erreicht, dort (zumindest teilweise) reflektiert wird und von einem Empfänger des Abtastsensors 44 registriert wird. Anhand der Laufzeit des Laserstrahls wird die Entfernung zum Reflexionspunkt bestimmt. Der Abtastsensor 44 wird um eine näherungsweise vertikale Achse verschwenkt, um einen Bereich quer zur Vorwärtsbewegungsrichtung abzurastern. Das Signal des Empfängers ermöglicht, den Winkel zwischen der Vorwärtsfahrtrichtung und der Position einer Bestandsgrenze festzustellen. Derartige Abtastsensoren 44 sind an sich bekannt und beispielsweise in der DE 197 43 884 A, EP 0 878 121 A und EP 0 887 660 A beschrieben, deren Offenbarung durch Verweis hierin mit aufgenommen wird. Es besteht auch die Möglichkeit, einen Laser-Entfernungssensor zu verwenden, bei dem nicht der Sender und/oder Empfänger gedreht wird, sondern ein stufenlos bzw. in Stufen rotierender Spiegel zur Abtastung des Sichtbereichs dient. Er kann einen Winkelbereich von bis zu 180° abtasten. Derartige Sensoren sind von der Fa. Sick AG, D-72796 Reute unter der Bezeichnung LMS erhältlich.

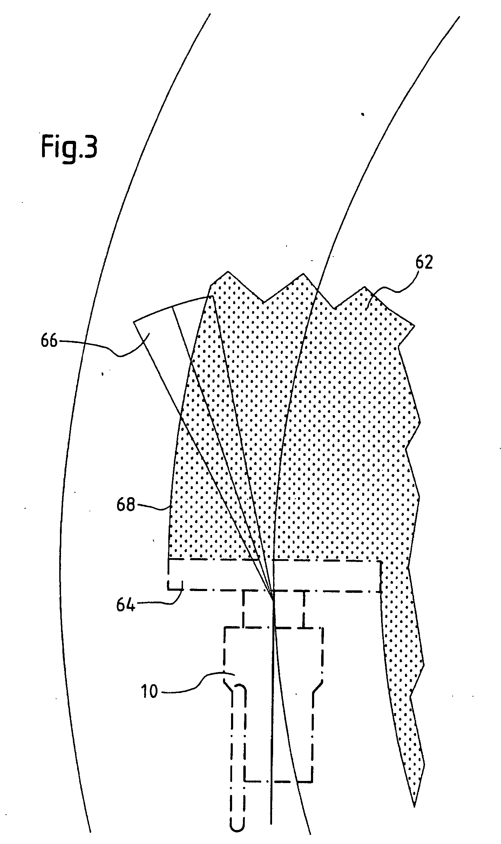

Der Positionssensor 42 und der Abtastsensor 44 sind über einen Bus mit einer Steuerungseinrichtung 46 verbunden, die auch mit einer Speichereinrichtung 48 verbunden ist. Die Steuerungseinrichtung 46 ist eingerichtet, eine Lenkeinrichtung 50 mit einem Lenksignal zu versorgen. Die Lenkeinrichtung 50 dient zur automatischen Einstellung des Lenkwinkels der rückwärtigen lenkbaren Räder 14. Weiterhin ist die Steuerungseinrichtung 46 über den Bus mit einem Speicher 70 verbunden, der an der Erntegutbergungseinrichtung 64 (s. Figur 3) angeordnet ist und eine Information über deren Arbeitsbreite enthält. Der auf der Erntegutbergungseinrichtung 64 angeordnete Teil des Busses 52 ist über eine Steckverbindung lösbar mit dem Teil des Busses 52 verbunden, der sich an Bord des Arbeitsfahrzeugs 10 befindet.

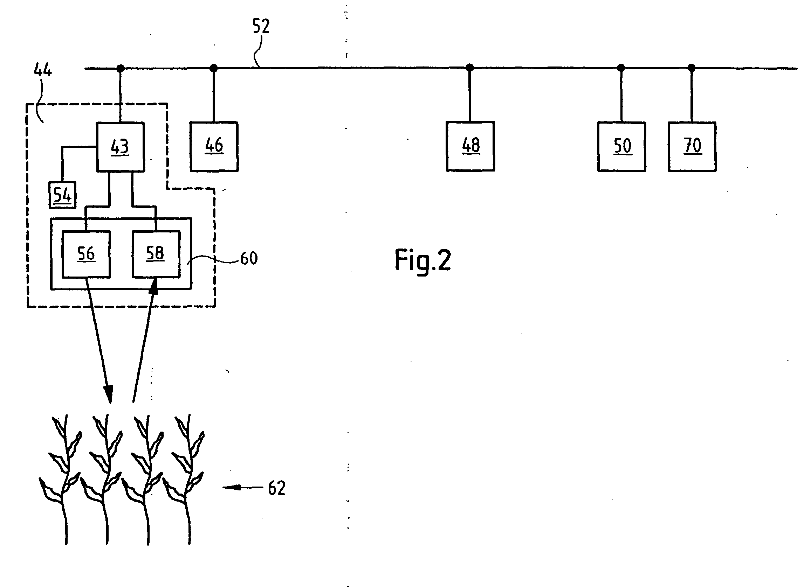

Anhand der Figur 2 ist erkennbar, dass der Abtastsensor 44, die Steuerungseinrichtung 46, die Lenkeinrichtung 50 und die Speichereinrichtung 48 durch einen Bus 52 verbunden sind. Dabei kann es sich um einen CAN- oder LBS-Bus handeln.

Der Abtastsensor 44 umfasst eine Abtastsensorsteuerung 43, die mit dem Sender 56, dem Empfänger 58 und einem Schwenkmotor 54 verbunden ist. Der Sender 56 und der Empfänger 58 sind auf einem Schwenktisch 60 angeordnet, der durch den Schwenkmotor 54 um eine etwa vertikale, leicht nach vorn geneigte Achse hin-und her schwenkbar ist. Die vom Sender 56 abgestrahlten elektromagnetischen (Licht-) Wellen, die im sichtbaren Bereich oder darüber oder darunter liegen können, erreichen den Erdboden im Abstand von einigen Metern (beispielsweise 10 m) in der Fahrtrichtung der Erntemaschine 10 vor der Erntegutbergungsvorrichtung. Der Empfänger 58 erfasst die vom Sender 56 abgestrahlten Wellen, die vom Erdboden oder gegebenenfalls darauf stehenden Pflanzen 62 oder anderen Gegenständen reflektiert werden. Da die vom Sender 56 abgestrahlten Wellen amplitudenmoduliert sind, ist über eine Laufzeitmessung eine Erfassung des Abstands zwischen der Laser-Messeinrichtung 42 und dem Punkt, an dem die Wellen reflektiert wurden, möglich. Der Schwenkmotor 54 ist ein Schrittmotor und verschwenkt den Schwenktisch 60 kontinuierlich um einen durch die Steuerung vorgebbaren Winkelbereich um die Achse hin und her. Die Abtastsensorsteuerung 43 ist eingerichtet, für jeden Schwenkwinkel des Schwenktischs 60 den jeweiligen Winkel und den Abstand vom Reflexionspunkt der vom Empfänger 58 aufgenommenen Wellen zu erfassen. Anschließend wird der Schwenkmotor 54 aktiviert und der Schwenktisch 60 in eine andere Stellung verbracht. Der Abtastsensorsteuerung 43 liegt eine Information über den jeweiligen Winkel des Schwenktischs 60 vor, da sie den Schwenkmotor 54 steuert. Denkbar wäre auch ein separater Sensor zur Erfassung des Schwenkwinkels, wobei der Schrittmotor durch einen beliebigen Motor ersetzt werden kann. Findet ein Abtastsensor mit einem schwenkbaren Spiegel Verwendung, wird durch den Schwenkmotor der Schwenkbereich des Spiegels durchlaufen.

In Figur 3 ist eine Draufsicht auf das Arbeitsfahrzeug beim Abernten eines Felds dargestellt. Die Erntegutbergungseinrichtung 64 ist ein Schneidwerk, das die Pflanzen (Getreide) vom Feld aberntet. Das Bezugszeichen 68 kennzeichnet die Bearbeitungsgrenze zwischen dem abgeernteten Bereich des Felds und den noch abzuerntenden Pflanzen 62. Der vom Abtastsensor 44 überstrichene Winkelbereich ist mit dem Bezugszeichen 66 versehen. Es ist erkennbar, dass der rechte Endbereich des Winkelbereichs 66 die Bearbeitungsgrenze 68 überdeckt. Außerdem ist ersichtlich, dass eine Zeitverzögerung zwischen der Messung der Position der Bearbeitungsgrenze 68 und dem Zeitpunkt, an dem das Arbeitsfahrzeug den gemessenen Punkt erreicht, vorliegt, der bei der Ansteuerung der Lenkeinrichtung 50 zu berücksichtigen ist.

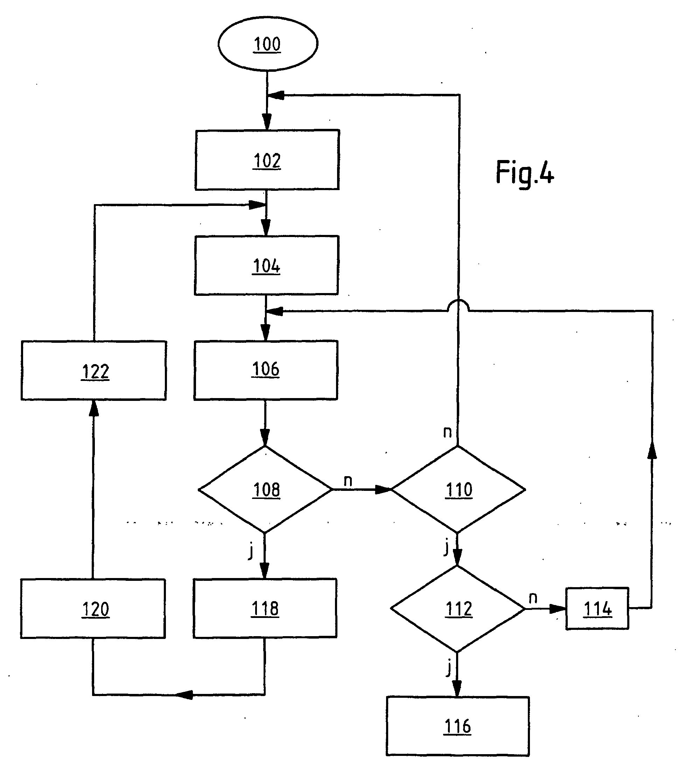

In Figur 4 ist ein Flussdiagramm dargestellt, nach dem die Steuerungseinrichtung 46 arbeitet. Nach dem Start in Schritt 100 wird in Schritt 102 die Seite und Lage der Bearbeitungsgrenze 68 relativ zum Arbeitsfahrzeug 10 identifiziert. Dazu wird die aktuelle Position des Arbeitsfahrzeugs 10 mit dem Positionssensor 42 ermittelt und mit einer digitalen Karte des abzuerntenden Felds verglichen, die in der Speichereinrichtung 48 abgelegt ist. Aus diesen Informationen wird in Verbindung mit der Arbeitsbreite der Erntegutbergungseinrichtung 64, die im Speicher 70 abgelegt ist, die Seite und die etwaige Lage der Bearbeitungsgrenze relativ zur Arbeitsmaschine abgeleitet.

Es folgt Schritt 104, in dem die Steuerungseinrichtung 46 die Abtastsensorsteuerung 43 veranlasst, einen (relativ kleinen) Winkelbereich um die erwartete Lage der Bearbeitungsgrenze abzutasten. Der Abtastsensorsteuerung 43 wird eine Information über die linke und die rechte Grenze des Winkelbereichs zugeführt, und eine Anweisung, eine Abtastung durchzuführen. Dabei werden vom Schwenkwinkel abhängige Entfernungsmesswerte aufgezeichnet, die von der Laufzeit der Lichtstrahlen abhängen.

Im nachfolgenden Schritt 106 identifiziert die Steuerungseinrichtung 46 in den Entfernungsmesswerten eine Stufe und ordnet dem der Stufe zugehörigen Schwenkwinkel des Abtastsensors die Bearbeitungsgrenze zu. Liegen mehrere Stufen vor, wird anhand der Karte in der Speichereinrichtung 48, der aus dem Positionssignal des Positionssensors 42 abgeleiten derzeitigen Position und des zuvor zurückgelegten Wegs, der sich aus in der Speichereinrichtung 48 abgelegten Daten ermitteln lässt, ebenfalls die jeweils richtige Kante identifiziert. In diesem Schritt wird außerdem eine Information generiert, ob überhaupt eine Bearbeitungsgrenze identifizierbar war.

Es folgt Schritt 108, in dem eine Abfrage erfolgt, ob eine Bearbeitungsgrenze identifiziert wurde. Wenn das Ergebnis positiv ist, folgt Schritt 118, in dem die Steuerungseinrichtung 46 der Lenkeinrichtung 50 ein auf der erfassten Bearbeitungsgrenze und der aus dem Speicher 70 ausgelesenen Arbeitsbreite der Erntegutbergungseinrichtung 64 generiertes Lenksignal zuführt, so dass die Arbeitsmaschine 10 unter optimaler Ausnutzung der Breite der Erntegutbergungseinrichtung 64 entlang der Bearbeitungsgrenze geführt wird. Hierbei wird die oben beschriebene Zeitverzögerung zwischen der Erfassung eines Punktes mit dem Abtastsensor 44 und dem Erreichen durch das Arbeitsfahrzeug 10 berücksichtigt. Außerdem wird in Schritt 120 ein neuer Winkelbereich um die in Schritt 106 identifizierte Bearbeitungsgrenze herum festgelegt. Danach wird in Schritt 122 eine Information über die derzeitige Position der Arbeitsmaschine 10 in der Speichereinrichtung 48 abgelegt. Es folgt wieder Schritt 104, in dem der neue Winkelbereich abgetastet wird.

Wenn Schritt 108 ergibt, dass die Bearbeitungsgrenze nicht identifizierbar war, folgt Schritt 110, in dem abgefragt wird, ob der im jeweils vorhergehenden Schritt 106 durchgeführte Abtastvorgang auf der Berechnung aus Schritt 102 basierte. Ist das nicht der Fall, besteht die Möglichkeit, dass die Bearbeitungsgrenze aus dem Sichtbereich des Abtastsensors 44 gelangt ist, was beispielsweise bei einer Kurvenfahrt (s. Figur 3), bei Lagergetreide oder am Vorgewende der Fall sein kann. Daher folgt dann wieder Schritt 102, in dem versucht wird, die mögliche Lage der Bearbeitungsgrenze durch die Positionsdaten vom Positionssensor 42 zu identifizieren.

Falls der im jeweils vorhergehenden Schritt 106 durchgeführte. Abtastvorgang auf der Berechnung aus Schritt 102 basierte, besteht die Möglichkeit, dass im Schritt 102 Fehler vorgelegen haben, beispielsweise ungenaue Positionsdaten vom Positionssensor 42 oder eine fehlerhafte Karte in der Speichereinrichtung 48. Daher folgt, falls Schritt 110 ergibt, dass die Abtastung auf Schritt 102 beruht, Schritt 112, in dem abgefragt wird, ob bereits der maximal mögliche Winkelbereich abgetastet wurde. Wenn das der Fall ist, ist keine Vergrößerung des Winkelbereichs mehr möglich. Da ein Fehler vorliegen muss, wird dann in Schritt 116 eine Fehlermeldung abgegeben und das Arbeitsfahrzeug 10 kann manuell gesteuert werden.

Falls Schritt 112 ergibt, dass noch nicht der maximale Winkelbereich durchlaufen wurde, folgt Schritt 114, in dem die Steuerungseinrichtung 46 die Abtastsensorsteuerung 43 veranlasst, einen größeren Winkelbereich abzutasten. Diesem Schritt folgt wieder Schritt 106.

## Patentansprüche

1. Einrichtung zur selbsttätigen Lenkung eines mit einem Bearbeitungswerkzeug versehenen landwirtschaftlichen Arbeitsfahrzeugs (10), mit einer Steuerungseinrichtung (46), die mit einem Abtastsensor (44) verbunden ist und einer Lenkeinrichtung (50) des Arbeitsfahrzeugs (10) ein auf einem Ausgangssignal des Abtastsensors (44) basierendes Lenksignal zuführt, so dass das Arbeitsfahrzeug (10) selbsttätig entlang einer vom Abtastsensor (44) erfassten Bearbeitungsgrenze (68) geführt wird, wobei der Steuerungseinrichtung eine Information darüber vorliegt, auf welcher Seite des Bearbeitungswerkzeugs sich die Bearbeitungsgrenze befindet, **dadurch gekennzeichnet, dass** die Steuerungseinrichtung (46) den Abtastbereich des Abtastsensors (44) abhängig von der Information steuert.

2. Einrichtung nach Anspruch 1, **dadurch gekennzeichnet, dass** die Steuerungseinrichtung (46) den Abtastbereich des Abtastsensors (44) in Abhängigkeit von einer Information über die näherungsweise zu erwartende Lage der Bearbeitungsgrenze (68) steuert.

3. Einrichtung nach Anspruch 2, **dadurch gekennzeichnet, dass** der Abtastbereich des Abtastsensors (44) so gesteuert wird, dass die Bearbeitungsgrenze stets optimal erkannt werden kann, wobei der Abtastsensor (44) in seiner Ausrichtung verändert wird und/oder der Abtastbereich symmetrisch oder unsymmetrisch zur Bearbeitungsgrenze verkleinert, vergrößert und/oder verschoben wird.

4. Einrichtung nach einem der Ansprüche 1 bis 3, **dadurch gekennzeichnet, dass** die Steuerungseinrichtung (46) den Abtastbereich des Abtastsensors (44) auf einen Bereich um die seitliche Begrenzung des Bearbeitungswerkzeugs bzw. um die näherungsweise zu erwartende Lage der Bearbeitungsgrenze (68) herum einschränkt.

5. Einrichtung nach Anspruch einem der Ansprüche 1 bis 4, **dadurch gekennzeichnet, dass** der Abtastbereich des Abtastsensors (44) in Abhängigkeit von der Geschwindigkeit festgelegt wird.

6. Einrichtung nach Anspruch 5, **dadurch gekennzeichnet, dass** der Abtastsensor (44) derart gesteuert wird, dass der Abstand zwischen dem Messpunkt auf dem Feld und dem Abtastsensor (44) geschwindigkeitsabhängig ist, um eine nahezu gleichbleibende Zeitverzögerung zwischen Zeitpunkt der Messung und Erreichen des Reflektionspunktes zu erzielen.

7. Einrichtung nach einem der Ansprüche 1 bis 6, **dadurch gekennzeichnet, dass** der Steuerungseinrichtung (46) eine Information über die Seite und/oder Lage der Bearbeitungsgrenze (68) relativ zum Bearbeitungswerkzeug manuell zugeführt wird.

8. Einrichtung nach einem der Ansprüche 1 bis 7, **dadurch gekennzeichnet, dass** die Steuerungseinrichtung (46) die Information über die Seite und/oder Lage der Bearbeitungsgrenze (68) relativ zum Bearbeitungswerkzeug aus dem Ausgangssignal des Abtastsensors (44) ableitet.

9. Einrichtung nach einem der Ansprüche 1 bis 8, **dadurch gekennzeichnet, dass** die Steuerungseinrichtung (46) die Information über die Seite und/oder Lage der Bearbeitungsgrenze (68) relativ zum Bearbeitungswerkzeug aus ihr zugeführten Daten aus mindestens einer externen Quelle ableitet.

10. Einrichtung nach Anspruch 9, **dadurch gekennzeichnet, dass** die externe Quelle eine Speichereinrichtung (70) ist, in der eine Information über die Breite des Bearbeitungswerkzeugs und/oder der Abstand seiner linken und/oder rechten Kante von der Längsachse des Arbeitsfahrzeugs (10) abgelegt ist.

11. Einrichtung nach Anspruch 9 oder 10, **dadurch gekennzeichnet, dass** die externe Quelle ein Positionssensor (42) ist.

12. Einrichtung nach Anspruch 11, **dadurch gekennzeichnet, dass** der Positionssensor (42) ein Satellitensignalempfänger und/oder ein Trägheitssensor und/oder ein Bewegungssensor ist.

13. Einrichtung nach Anspruch 11 oder 12, **dadurch gekennzeichnet, dass** der Positionssensor ein Schnittbreitensensor ist.

14. Einrichtung nach einem der Ansprüche 11 bis 13, **dadurch gekennzeichnet, dass** die Steuerungseinrichtung (46) aus den Signalen des Positionssensors (42) den zurückgelegten Weg ableitet und abspeichert und aus dem abgespeicherten Weg und/oder einer abgespeicherten Karte die Information über die Seite und/oder Lage der Bearbeitungsgrenze (68) relativ zum Bearbeitungswerkzeug ableitet.

15. Landwirtschaftliches Arbeitsfahrzeug 110), insbesondere Erntemaschine oder Zugfahrzeug, mit einer Einrichtung nach einem der vorhergehenden Ansprüchen.

## Claims

1. A system for automatically steering an agricultural work vehicle (10) equipped with an operating implement, with a controller (46), which is connected to a scanning sensor (44) and feeds a steering signal based on an output signal of the scanning sensor (44) to a steering controller (50), so that the work vehicle (10) is automatically guided along a boundary of operation (68) detected by the scanning sensor (44), wherein the controller is supplied with information concerning on which side of the operating implement the boundary of operation is located, **characterised in that** the controller (46) controls the scanning region of the scanning sensor (44) in dependence on the information.

2. System according to Claim 1, **characterised in that** the controller (46) controls the scanning region of the scanning sensor (44) as a function of information concerning the approximately expected position of the boundary of operation (68).

3. System according to Claim 2, **characterised in that** the scanning region of the scanning sensor (44) is controlled in such a way that the boundary of operation can always be optimally detected, wherein the orientation of the scanning sensor (44) is changed and/or the scanning region is reduced, enlarged and/or shifted symmetrically or asymmetrically to the boundary of operation.

4. System according to one of Claims 1 to 3, **characterised in that** the controller (46) limits the scanning region of the scanning sensor (44) to a region around the lateral boundary of the operating implement or around the approximately expected position of the boundary of operation (68).

5. System according to one of Claims 1 to 4, **characterised in that** the scanning region of the scanning sensor (44) is established as a function of the speed.

6. System according to Claim 5, **characterised in that** the scanning sensor (44) is controlled in such a way that the distance between the measurement point on the field and the scanning sensor (44) is dependent on speed in order to obtain a virtually constant time delay between the point in time of the measurement and that of reaching the reflection point.

7. System according to one of Claims 1 to 6, **characterised in that** the controller (46) is manually supplied with information concerning the side and/or position of the boundary of operation (68) relative to the operating implement.

8. System according to one of Claims 1 to 7, **characterised in that** controller (46) derives the information concerning the side and/or position of the boundary of operation (68) relative to the operating implement from the output signal of the scanning sensor (44).

9. System according to one of Claims 1 to 8, **characterised in that** the controller (46) derives the information concerning the side and/or position of the boundary of operation (68) relative to the operating implement from data supplied to it from at least one external source.

10. System according to Claim 9, **characterised in that** the external source is a memory (70), in which information is filed concerning the width of the operating implement and/or the distance of its left and/or right edge from the longitudinal axis of the work vehicle (10).

11. System according to Claim 9 or 10, **characterised in that** the external source is a position sensor (42).

12. System according to Claim 11, **characterised in that** the position sensor (42) is a satellite signal receiver and/or an inertia sensor and/or a movement sensor.

13. System according to Claim 11 or 12, **characterised in that** the position sensor is a cutting width sensor.

14. System according to one of Claims 11 to 13, **characterised in that** the controller (46) derives the path covered from the signals of the position sensor (42) and stores it, and derives the information concerning the side and/or position of the boundary of operation (68) relative to the operating implement from the stored path and/or a stored map.

15. Agricultural work vehicle (10), in particular a harvester or tractor, with a system according to one of the preceding claims.

## Revendications

1. Dispositif de guidage automatique d'un véhicule agricole (10), muni d'un outil de travail, comportant un dispositif de commande (46), qui est relié à un palpeur (44) et qui transmet un signal de direction, basé sur un signal de sortie du palpeur (44), vers un dispositif de direction (50) du véhicule agricole (10), de telle sorte que le véhicule agricole (10) est guidé automatiquement le long d'une limite de travail (68), détectée par le palpeur (44), le dispositif de commande (46) disposant d'une information indiquant sur quel côté de l'outil de travail se situe la limite de travail, **caractérisé en ce que** le dispositif de commande (46) commande la zone de balayage du palpeur (44) en fonction de l'information.

2. Dispositif selon la revendication 1, **caractérisé en ce que** le dispositif de commande (46) commande la zone de balayage du palpeur (44) en fonction d'une information sur la position de la limite de travail (68) à escompter approximativement.

3. Dispositif selon la revendication 2, **caractérisé en ce que** la zone de balayage du palpeur (44) est commandée de telle sorte que la limite de travail (68) peut toujours être détectée de manière optimale, l'orientation du palpeur (44) étant modifiée et/ou la zone de balayage étant réduite, agrandie et/ou décalée symétriquement ou non symétriquement par rapport à la limite de travail.

4. Dispositif selon l'une quelconque des revendications 1 à 3, **caractérisé en ce que** le dispositif de commande (46) restreint la zone de balayage du palpeur (44) à une zone autour de la délimitation latérale de l'outil de travail ou autour de la position de la limite de travail (68) à escompter approximativement.

5. Dispositif selon l'une quelconque des revendications 1 à 4, **caractérisé en ce que** la zone de balayage du palpeur (44) est définie en fonction de la vitesse.

6. Dispositif selon la revendication 5, **caractérisé en ce que** le palpeur (44) est commandé de telle sorte que la distance entre le point de mesure sur le champ et le palpeur (44) est fonction de la vitesse, en vue d'obtenir un délai pratiquement constant entre le moment de la mesure et l'arrivée au point de réflexion.

7. Dispositif selon l'une quelconque des revendications 1 à 6, **caractérisé en ce qu'**une information sur le côté et/ou le positionnement de la limite de travail (68) par rapport à l'outil de travail est transmise manuellement au dispositif de commande (46).

8. Dispositif selon l'une quelconque des revendications 1 à 7, **caractérisé en ce que** le dispositif de commande (46) dérive à partir du signal de sortie du palpeur (44) l'information sur le côté et/ou le positionnement de la limite de travail (68) par rapport à l'outil de travail.

9. Dispositif selon l'une quelconque des revendications 1 à 8, **caractérisé en ce que** le dispositif de commande (46) dérive à partir de données d'au moins une source externe, qui lui sont transmises, l'information sur le côté et/ou le positionnement de la limite de travail (68) par rapport à l'outil de travail.

10. Dispositif selon la revendication 9, **caractérisé en ce que** la source externe est une unité de mémoire (70), dans laquelle est stockée une information sur la largeur de l'outil de travail et/ou sur la distance entre son côté gauche et/ou droit et l'axe longitudinal du véhicule agricole (10).

11. Dispositif selon la revendication 9 ou 10, **caractérisé en ce que** la source externe est un capteur de position (42).

12. Dispositif selon la revendication 11, **caractérisé en ce que** le capteur de position (42) est un récepteur de signaux par satellite et/ou un capteur inertiel et/ou un capteur de mouvement.

13. Dispositif selon la revendication 11 ou 12, **caractérisé en ce que** le capteur de position est un capteur de largeur de coupe.

14. Dispositif selon l'une quelconque des revendications 11 à 13, **caractérisé en ce que** le dispositif de commande (46) dérive à partir des signaux du capteur de position (42) le trajet parcouru et le stocke en mémoire, et à partir du trajet mémorisé et/ou d'une carte enregistrée en mémoire, dérive l'information sur le côté et/ou le positionnement de la limite de travail (68) par rapport à l'outil de travail.

15. Machine agricole (10), en particulier machine de récolte ou tracteur, comportant un dispositif selon l'une quelconque des revendications précédentes.
